# EUROPEAN PATENT APPLICATION

(11) **EP 2 542 017 A2**
(43) Date of publication of application: **02.01.2013**
(21) Application number: 12173249.9
(22) Date of filing: 22.06.2012
(51) Int. Cl.: H04W 84/18

(54) **Apparatus and method for enhancing wireless mesh network communications**

(30) Priority: 27.06.2011 US 201113169196
(71) Applicant: General Electric Company, Schenectady, NY 12345 (US)
(72) Inventor: Nikkels, Robert R., Minden, NV 89423 (US)
(74) Representative: Picker, Madeline Margaret

(57) **Abstract**

A wireless mesh network (220) includes a plurality of radio data nodes (265). The wireless mesh network also includes at least one alternating current (AC) conduit (290/300) coupled to at least two of the plurality of the radio data nodes. The at least one AC conduit is configured to transmit data between the at least two of the plurality of radio data nodes.

## Description

### BACKGROUND OF THE INVENTION

The embodiments described herein relate generally to wireless communications and, more particularly, to methods and apparatus for enhancing communications transmitted via wireless mesh networks.

Many known communications networks are configured as wireless mesh networks (WMNs). Such WMNs include a plurality of radio data nodes organized in a mesh topology. The radio data nodes operate as transmitters and receivers using the radio frequency (RF) spectrum to transfer data in short bursts, as compared to near continuous transmission of data across networks that include wiring/cables. At least some known WMNs are implemented within a monitoring system and are used to transmit sensor information from monitoring sensor devices to a gateway device for collection and/or further transmission via the radio data nodes. Typically, in such known monitoring systems and WMNs, the only wiring used in the portions between the monitoring sensor devices and the gateway device is between the sensor devices and the radio data nodes. Many known radio data nodes have an omnidirectional antenna with a beam range of approximately 25 meters (m) (82 feet (ft)) that facilitates attaining transmission and receipt ranges of less than 50 m (164 ft), depending on the amount of beam overlap desired.

At least some of such known monitoring systems and WMNs are used in facilities that include portions thereof where the radio linkage path between adjacent nodes and/or the gateway device is relatively short with a relatively large amount of signal attenuation, for example, between thick walls or other structures. Also, some monitoring systems may group a plurality of monitoring sensor devices within regions of the facility, thereby defining data collection groups. At least some of these data collection groups may be positioned in remote areas of the facility to define remote groups, wherein such remote groups need to be operatively coupled to a main group. Operatively coupling remote groups to a main group using radio data nodes with a 50 m (164 ft) range may be difficult due to a multitude of physical obstructions across a lengthy distance defining a tortuous communications path. Such lengthy and tortuous paths may increase the number of radio data nodes, thereby increasing the costs of installation, and increasing the complexity of operation and maintenance of the WMN and the monitoring system.

### BRIEF DESCRIPTION OF THE INVENTION

In one aspect, a wireless mesh network. The wireless mesh network includes a plurality of radio data nodes. The wireless mesh network also includes at least one alternating current (AC) conduit coupled to at least two of the plurality of radio data nodes. The at least one AC conduit is configured to transmit data between the at least two of the plurality of radio data nodes.

In another aspect, a method of assembling a network is provided. The method includes coupling an alternating current (AC) electric power system to at least two radio data nodes. The method also includes configuring the at least two radio data nodes and the AC electric power system to transmit data therebetween.

In yet another aspect, a monitoring system is provided. The monitoring system includes at least one sensor measurement device. The system also includes at least one computing device coupled to the at least one sensor measurement device. The system further includes a plurality of radio data nodes. At least one of the plurality of radio data nodes is coupled to the at least one computing device. The system also includes at least one alternating current (AC) conduit coupled to at least two of the plurality of radio data nodes. The at least one AC conduit is configured to transmit data between the at least two of the plurality of radio data nodes.

### BRIEF DESCRIPTION OF THE DRAWINGS

FIG. 1 is a block diagram of an example computing device that may be used to monitor and/or control the operation of a machine;
FIG. 2 is block diagram of an example machine monitoring system that includes a machine controller, and a facility controller coupled in communication via a portion of a network;
FIG. 3 is a schematic view of a plurality of example radio data nodes that may be used with the monitoring system shown in FIG. 2;
FIG. 4 is a schematic view of the radio data nodes shown in FIG. 3 and an example alternating current (AC) electric power system integrated in the monitoring system shown in FIG. 2; and
FIG. 5 is a flow chart of an example method of assembling the network shown in FIG. 4.

### DETAILED DESCRIPTION OF EMBODIMENTS OF THE INVENTION

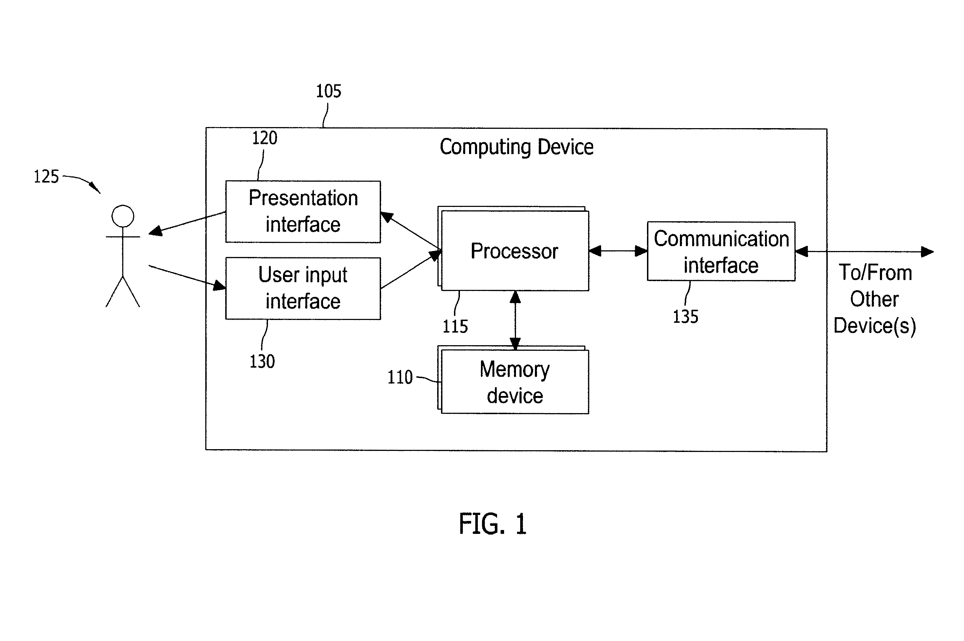

FIG. 1 is a block diagram of an example computing device 105 that may be used to monitor and/or control the operation of a machine (not shown in FIG. 1). Computing device 105 includes a memory device 110 and a processor 115 operatively coupled to memory device 110 for executing instructions. In some embodiments, executable instructions are stored in memory device 110. Computing device 105 is configurable to perform one or more operations described herein by programming processor 115. For example, processor 115 may be programmed by encoding an operation as one or more executable instructions and providing the executable instructions in memory device 110. Processor 115 may include one or more processing units (e.g., in a multicore configuration).

In the example embodiment, memory device 110 is one or more devices that enable storage and retrieval of information such as executable instructions and/or other data. Memory device 110 may include one or more computer readable media, such as, without limitation, random access memory (RAM), dynamic random access memory (DRAM), static random access memory (SRAM), a solid state disk, a hard disk, read-only memory (ROM), erasable programmable ROM (EPROM), electrically erasable programmable ROM (EEPROM), and/or non-volatile RAM (NVRAM) memory. The above memory types are example only, and are thus not limiting as to the types of memory usable for storage of a computer program.

Further, as used herein, the terms "software" and "firmware" are interchangeable, and include any computer program stored in memory for execution by personal computers, workstations, clients and servers.

Memory device 110 may be configured to store operational measurements including, without limitation, vibration readings, field voltage and current readings, field reference setpoints, stator voltage and current readings, rotor speed readings, maintenance tasks, and/or any other type of data. In some embodiments, processor 115 removes or "purges" data from memory device 110 based on the age of the data. For example, processor 115 may overwrite previously recorded and stored data associated with a subsequent time and/or event. In addition, or alternatively, processor 115 may remove data that exceeds a predetermined time interval.

In some embodiments, computing device 105 includes a presentation interface 120 coupled to processor 115. Presentation interface 120 presents information, such as a user interface and/or an alarm, to a user 125. For example, presentation interface 120 may include a display adapter (not shown) that may be coupled to a display device (not shown), such as a cathode ray tube (CRT), a liquid crystal display (LCD), an organic LED (OLED) display, and/or an "electronic ink" display. In some embodiments, presentation interface 120 includes one or more display devices. In addition, or alternatively, presentation interface 120 may include an audio output device (not shown) (e.g., an audio adapter and/or a speaker) and/or a printer (not shown). In some embodiments, presentation interface 120 presents an alarm associated with a synchronous machine (not shown in FIG. 1), such as by using a human machine interface (HMI) (not shown).

In some embodiments, computing device 105 includes a user input interface 130. In the example embodiment, user input interface 130 is coupled to processor 115 and receives input from user 125. User input interface 130 may include, for example, a keyboard, a pointing device, a mouse, a stylus, a touch sensitive panel (e.g., a touch pad or a touch screen), a gyroscope, an accelerometer, a position detector, and/or an audio input interface (e.g., including a microphone). A single component, such as a touch screen, may function as both a display device of presentation interface 120 and user input interface 130.

A communication interface 135 is coupled to processor 115 and is configured to be coupled in communication with one or more other devices, such as a sensor or another computing device 105, and to perform input and output operations with respect to such devices. For example, communication interface 135 may include, without limitation, a wired network adapter, a wireless network adapter, a mobile telecommunications adapter, a serial communication adapter, and/or a parallel communication adapter. Communication interface 135 may receive data from and/or transmit data to one or more remote devices. For example, a communication interface 135 of one computing device 105 may transmit an alarm to the communication interface 135 of another computing device 105.

Presentation interface 120 and/or communication interface 135 are both capable of providing information suitable for use with the methods described herein (e.g., to user 125 or another device). Accordingly, presentation interface 120 and communication interface 135 may be referred to as output devices. Similarly, user input interface 130 and communication interface 135 are capable of receiving information suitable for use with the methods described herein and may be referred to as input devices.

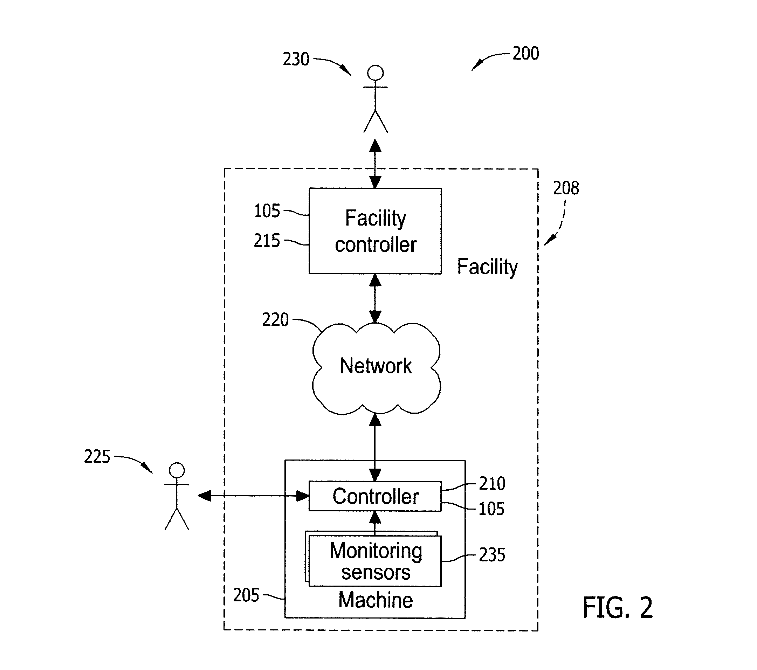

FIG. 2 is block diagram of an example system 200 that may be used to monitor and/or operate a machine 205. Machine 205 may be any industrial equipment for any industrial process, including, without limitation, a chemical process reactor, a heat recovery steam generator, a steam turbine, a gas turbine, a switchyard circuit breaker, and a switchyard transformer. In the example embodiment, machine 205 is a portion of a larger, integrated industrial facility 208. Facility 208 may include, without limitation, multiple units of machine 205. Also, in the example embodiment, facility 208 includes rugged geographic terrain including, without limitation, mountainous terrain and extended waterways (not shown). Further, in the example embodiment, system 200 includes a machine controller 210 and a facility controller 215 coupled in communication with each other via a network 220.

In the example embodiment, network 220 is a radio mesh network using any protocol and meeting the requirements of any specification and standard that enables operation of network 220 as described herein. Network 220 transmits relatively small volumes of information in small, short bursts, i.e., approximately, or less than, 250 Kilobits per second (Kbits/sec) and at a frequency of approximately 2.4 GHz in the transmission band. Embodiments of network 220 may include operative coupling with, without limitation, the Internet, a local area network (LAN), a wide area network (WAN), a wireless LAN (WLAN), and/or a virtual private network (VPN). While certain operations are described below with respect to particular computing devices 105, it is contemplated that any computing device 105 may perform one or more of the described operations. For example, controller 210 and controller 215 may perform all of the operations below.

Referring to FIGs. 1 and 2, machine controller 210, and facility controller 215 are computing devices 105. In the example embodiment, each computing device 105 is coupled to network 220 via communication interface 135. In an alternative embodiment, controller 210 is integrated with controller 215.

Controller 210 interacts with a first operator 225 (e.g., via user input interface 130 and/or presentation interface 120). For example, controller 210 may present information about machine 205, such as alarms, to operator 225. Facility controller 215 interacts with a second operator 230 (e.g., via user input interface 130 and/or presentation interface 120). For example, facility controller 215 may present alarms and/or maintenance tasks to second operator 230. As used herein, the term "operator" includes any person in any capacity associated with operating and maintaining facility 208, including, without limitation, shift operations personnel, maintenance technicians, and facility supervisors.

Machine 205 includes one or more monitoring sensors 235. In example embodiments, monitoring sensors 235 collect operational measurements including, without limitation, vibration readings, field voltage and current readings, field reference setpoints, stator voltage and current readings, rotor speed readings, maintenance tasks, and/or any other type of data. Monitoring sensors 235 repeatedly (e.g., periodically, continuously, and/or upon request) transmits operational measurement readings at the current time. For example, monitoring sensors 235 may produce an electrical current between a minimum value (e.g., 4 milliamps (ma)) and a maximum value (e.g., 20 ma). The minimum value is representative of an indication that no field current is detected. The maximum value is representative of an indication that the highest detectable amount of field current is detected. Controller 210 receives and processes the operational measurement readings.

Facility 208 includes additional monitoring sensors (not shown) similar to monitoring sensors 235 that collect operational data measurements associated with the remainder of facility 208 including, without limitation, data from redundant machines 205 and facility environmental data, including, without limitation, local wind speed, local wind velocity, and local outside temperatures. Such data is transmitted across network 220 and may be accessed by any device capable of accessing network 220 including, without limitation, desktop computers, laptop computers, and personal digital assistants (PDAs) (neither shown).

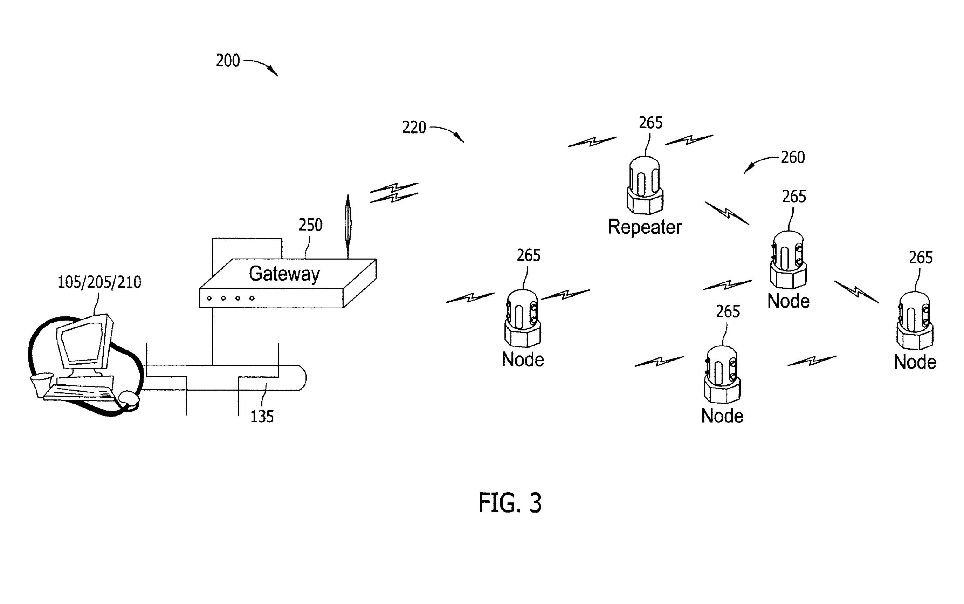

FIG. 3 is a schematic view of machine monitoring system 200. In the example embodiment, computing device 105 is one of machine controller 210 and/or facility controller 215. Also, in the example embodiment, each computing device 105 is coupled to network 220 via communication interface 135. Network 220 includes a gateway device 250, wherein device 250 is any gateway device that enables communication within network 220 as described herein, including, without limitation, a router, a modem, and a switch. Network 220 also includes a first portion 260 of wireless mesh network 220. First portion 260 includes a plurality of radio data nodes 265 organized in a mesh topology. Each radio data node 265 includes an omnidirectional antenna, and each radio data node 265 is, more specifically, one of a repeater device and an omnidirectional wireless sensor interface module (wSIM). Alternatively, radio data nodes 265 are any devices that enable operation of machine monitoring system 200 as described herein. In some embodiments, some radio data nodes 265 include a directional antenna. At least one radio data node 265 is operatively coupled in communication with gateway device 250. Also, each radio data node 265 is operatively coupled in communication with at least one adjacent radio data node 265. Further, each radio data node 265 has a range of approximately 25 meters (m) (82 feet (ft)) and adjacent nodes 265 are positioned within 50 m (164 ft) of each other with an overlap region (not shown) defined therebetween.

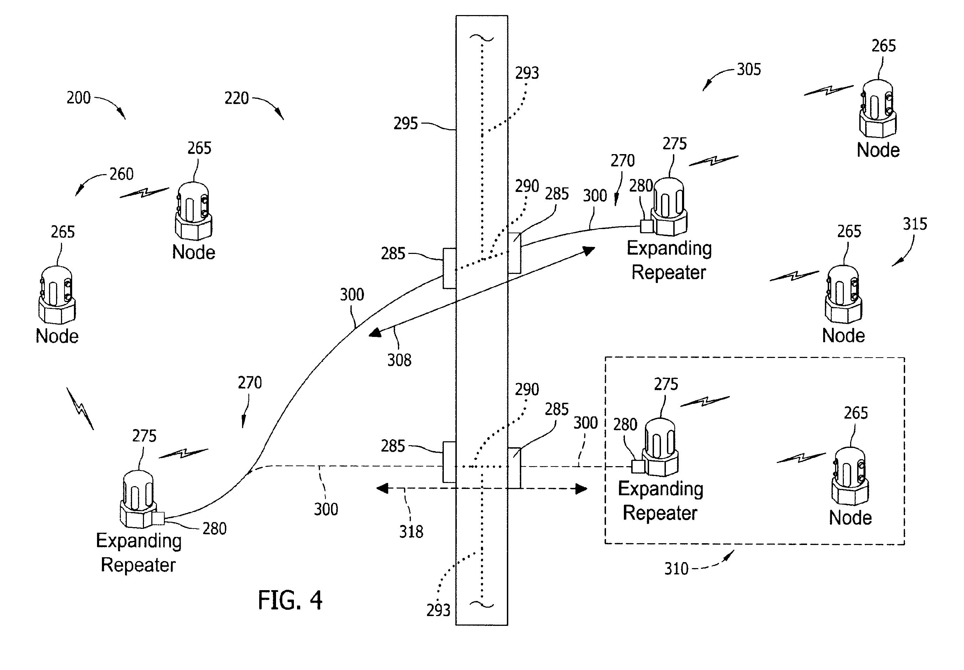

FIG. 4 is a schematic view of radio data nodes 265 and an example alternating current (AC) electric power system 270 integrated in monitoring system 200. In the example embodiment, AC electric power system 270 is a large 110 Volt AC (VAC) electric power system typically found in most facilities, wherein only a portion of AC system 270 is shown. Alternatively, AC electric power system 270 may have any voltage. AC electric power system 270 may operate at 50 Hertz (Hz) or 60 Hz. Alternatively, AC electric power system 270 may have any frequency. AC electric power system 270 is a singular, integrated system, i.e., system 270 is formed within one utility power grid to facilitate uniformity of electrical parameters that include, without limitation, voltage and frequency.

Also, in the example embodiment, AC electric power system 270 includes a plurality of additional radio data nodes, or, more specifically, expanding repeaters 275. Each expanding repeater 275 includes an omnidirectional antenna (not shown) for communication with radio data nodes 265. Each expanding repeater 275 also includes a modem 280. Each modem 280 modulates digital signals received from radio data nodes 265 via an analog carrier signal that is transmitted to another modem 280. Each modem 280 also demodulates, or filters out, the analog carrier signal received from another modem 280, such that the digital signals are further transmitted to radio data nodes 265.

Further, in the example embodiment, each modem 280 includes sufficient memory and processing hardware (neither shown) operatively coupled to monitor and control the signal modulation and demodulation, thereby enabling operation of system 200 and network 220 as described herein. Modem 280 includes executable instructions stored in the memory to direct the processor to perform one or more operations to facilitate the signal transmissions. Moreover, in the example embodiment, the memory device within each modem 280 is a firmware device including, without limitation, EPROM, EEPROM, and/or NVRAM, wherein the executable instructions reside within the firmware. Alternatively, each modem 280 may be a portion of a larger computing device such that the memory device may include, without limitation, RAM, DRAM, SRAM, a solid state disk, a hard disk, and ROM. The above memory types represent examples only, and are thus not limiting as to the types of memory usable for storage of a computer program and executable instructions thereof.

Also, in the example embodiment, AC electric power system 270 includes a plurality of standard wall outlets 285, wherein at least two outlets 285 are coupled to each other via a standard electric power cable 290. For clarity, FIG. 4 shows cables 290 as two individual channels. However, a typical 110 VAC electrical system is interconnected as shown by interconnections 293. Outlets 285 are coupled to a wall 295 and each cable 290 extends through wall 295. Further, in the example embodiment, each modem 280 is coupled to a wall outlet 285 via a connecting cable 300, wherein connecting cable 300 transmits the analog carrier signals generated by modem 280 as well as AC electric power to each expanding repeater 275. Each modem 280 includes sufficient filtering hardware and executable instructions to filter out a substantial portion of 50 Hz and 60 Hz interference.

In the example embodiment, first portion 260 of network 220 is operatively coupled to a second portion 305 of network 220. Data is transmitted between first portion 260 and second portion 305 as shown by bi-directional arrow 308. In alternative embodiments, first portion 260 may also be operatively coupled to a third portion 310 (shown in phantom), wherein second portion 305 and third portion 310 define a family 315 of portions of network 220. Data is transmitted between first portion 260 and third portion 310 as shown by bi-directional arrow 318.

Using AC electric power system 270 to transmit data between portions 260, 305, and 310 facilitates data collection and transfer in regions of facility 208 (shown in FIG. 2) that include obstructions defining a tortuous communications path that would otherwise inhibit and/or attenuate radio frequency signals. Such obstructions may include walls and large pieces of equipment, for example, without limitation, storage tanks and silos, and turbomachines. Also, transmission of data through AC electric power system 270 increases the flexibility of the user in implementing network 220 and system 200. For example, first portion 260 may be implemented in one region of facility 208 and second portion 305 may be implemented in another, remote region of facility 208, including, without limitation, regions separated by large distances, regions located on different levels/floors, regions in separate rooms/compartments, and regions in separate buildings. Each region includes at least one connection to AC electric power system 270, for example, wall outlet 285. Eliminating a need for a large number of redundant radio data nodes 265 by using existing AC electric power system 270 facilitates decreasing the costs of installation, and decreasing the complexity of operation and maintenance of network 220 and system 200. Also, the need for removal of obstructions is reduced, thereby further decreasing costs of implementation.

Also, in the example embodiment, radio data nodes 265 and expanding repeaters 275 transmit and receive relatively small volumes of information in short data bursts. However, AC electric power system 270 transmits the modulated digital data bursts to substantially continuous analog transmissions. Therefore, the higher data rate of nodes 265 and the lower data rate of power system 270 significantly reduce a potential of inducing data bottlenecks between portions 260, 305, and 310.

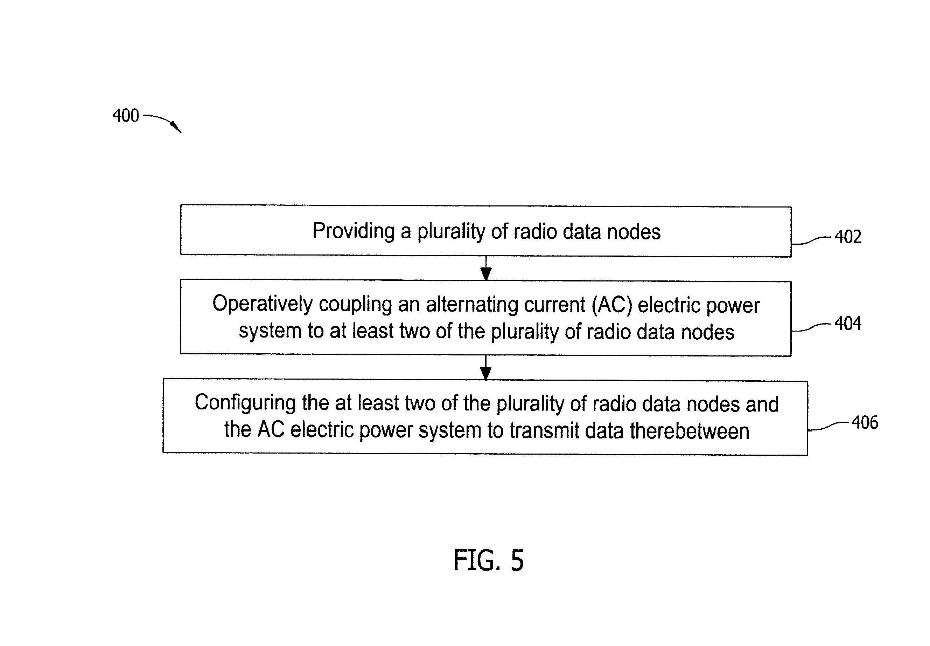

FIG. 5 is a flow chart of an example method 400 of assembling network 220 (shown in FIGs. 3 and 4). In the example embodiment, a plurality of radio data nodes 265 (shown in FIGs. 3 and 4) is provided 402. AC electric power system 270 (shown in FIG. 4) is operatively coupled 404 to at least some of radio data nodes 265. At least some of radio data nodes 265 and AC electric power system 270 are configured 406 to transmit data therebetween.

In contrast to known wireless mesh networks and monitoring systems, the methods, systems, and apparatus described herein provide low cost transmission of monitoring data. Specifically, in contrast to known wireless mesh networks, the monitoring methods, systems, and apparatus described herein facilitate transmitting operational data associated with a facility that includes obstructions that define a tortuous communications path that would otherwise inhibit and/or attenuate radio frequency signals. Also, specifically, in contrast to known wireless mesh networks, the monitoring methods, systems, and apparatus described herein use an existing AC electric power system extending through the facility. More specifically, portions of the wireless mesh network are coupled to portions of the electric power system to bypass the obstructions. Also, specifically, integrating the electric power system with the wireless mesh networks and monitoring systems described herein facilitates transmitting operational data between regions of the facility separated by large distances, located on different levels/floors, located in separate rooms/compartments, and/or in separate buildings. Eliminating a need for a large number of redundant radio data nodes, and/or reducing a need to remove obstructions, by using the existing AC electric power system facilitates decreasing the costs of installation, and decreasing the complexity of operation and maintenance of the wireless mesh networks and monitoring systems described herein.

An example technical effect of the methods, systems, and apparatus described herein includes at least one of (a) enabling transmission and receipt of monitoring data in areas of a facility that would otherwise be difficult without a large number of radio data nodes and/or removal of obstructions; and (b) enabling transmission and receipt of monitoring data in areas of a facility in remote and/or difficult-to-access regions.

The methods and systems described herein are not limited to the specific embodiments described herein. For example, components of each system and/or steps of each method may be used and/or practiced independently and separately from other components and/or steps described herein. In addition, each component and/or step may also be used and/or practiced with other assemblies and methods.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

Some embodiments involve the use of one or more electronic or computing devices. Such devices typically include a processor or controller, such as a general purpose central processing unit (CPU), a graphics processing unit (GPU), a microcontroller, a reduced instruction set computer (RISC) processor, an application specific integrated circuit (ASIC), a programmable logic circuit (PLC), and/or any other circuit or processor capable of executing the functions described herein. The methods described herein may be encoded as executable instructions embodied in a computer readable medium, including, without limitation, a storage device and/or a memory device. Such instructions, when executed by a processor, cause the processor to perform at least a portion of the methods described herein. The above represent examples only, and thus are not intended to limit in any way the definition and/or meaning of the term processor.

While the invention has been described in terms of various specific embodiments, those skilled in the art will recognize that the invention can be practiced with modification within the scope of the claims.

## Claims

1. A wireless mesh network (220) comprising:
a plurality of radio data nodes (265); and
at least one alternating current (AC) conduit (290/300) coupled to at least two of said plurality of said radio data nodes (265/275), said at least one AC conduit configured to transmit data between said at least two of said plurality of radio data nodes.

2. A wireless mesh network (220) in accordance with Claim 1, wherein said at least two of said plurality of radio data nodes (265/275) are expanding repeaters (275) comprising:
at least one antenna; and
at least one modem (280).

3. A wireless mesh network (220) in accordance with Claim 2, wherein said at least one modem (280) comprises filtering hardware to filter out a substantial portion of 50 Hertz (Hz) and 60 Hz interference.

4. A wireless mesh network (220) in accordance with Claim 1, 2 or 3, wherein said plurality of radio data nodes (265) comprises a plurality of wireless sensor interface modules (265), wherein each wireless sensor interface module (265) comprises at least one antenna.

5. A wireless mesh network (220) in accordance with Claim 4, wherein at least one of said plurality of wireless sensor interface modules (265) is operatively coupled to at least one of:
a computing device (105); and
at least one expanding repeater (275) operatively coupled to said at least one AC conduit (290/300).

6. A wireless mesh network (220) in accordance with any one of Claims 1 to 5, wherein said at least one AC conduit (290/300) is operatively coupled to a wall outlet (285).

7. A wireless mesh network (220) in accordance with any one of Claims 1 to 6, wherein said at least one AC conduit (290/300) comprises an AC electric power system (270) comprising a plurality of interconnecting AC conduits (293) coupled to a plurality of wall outlets (285).

8. A wireless mesh network (220) in accordance with any one of Claims 1 to 7, wherein said at least one AC conduit (290/300) is operatively coupled to a plurality of portions (260/305) of said wireless mesh network, wherein each portion of said plurality of portions comprises:
at least one expanding repeater (275) operatively coupled to said at least one AC conduit via a wall outlet (285); and
at least one wireless sensor interface module (265) operatively coupled to said at least one expanding repeater.

9. A monitoring system (200) comprising:
at least one sensor measurement device (235);
at least one computing device (105) coupled to said at least one sensor measurement device;
a plurality of radio data nodes (265/275), wherein at least one of said plurality of radio data nodes is coupled to said at least one computing device; and
at least one alternating current (AC) conduit (290/300) coupled to at least two of said plurality of said radio data nodes, said at least one AC conduit configured to transmit data between said at least two of said plurality of radio data nodes.

10. A monitoring system (200) in accordance with Claim 9, wherein said at least two of said plurality of radio data nodes (265) are expanding repeaters (275) comprising:
at least one antenna; and
at least one modem (280).

11. A monitoring system in accordance with Claim 10, wherein said at least one modem comprises filtering hardware to filter out a substantial portion of 50 Hertz (Hz) and 60 Hz interference.

12. A monitoring system in accordance with Claim 9, 10 or 11, wherein said at least one AC conduit (290/300) comprises an AC electric power system comprising a plurality of interconnecting AC conduits coupled to a plurality of wall outlets.

13. A monitoring system in accordance with Claim 9, 10, 11 or 12, wherein said at least one AC conduit (290/300) is operatively coupled to a plurality of portions of said monitoring system, wherein each portion of said plurality of portions of said monitoring system comprises:
at least one expanding repeater (275) operatively coupled to said at least one AC conduit via a wall outlet (285); and
at least one wireless sensor interface module (265) operatively coupled to said at least one expanding repeater.

14. A method of assembling a network, said method comprising:
operatively coupling an alternating current (AC) electric power system to at least two radio data nodes (265); and
configuring the at least two radio data nodes (265) and the AC electric power system to transmit data therebetween.

15. A method in accordance with Claim 14, wherein operatively coupling an AC electric power system to at least two radio data nodes comprises:
operatively coupling the AC electric power system to at least two expanding repeaters (275); and
assembling each expanding repeater (275) with at least one antenna therein.

16. A method in accordance with Claim 15, further comprising:
providing a plurality of additional radio data nodes, wherein at least some of the additional radio data nodes are wireless sensor interface modules (265);
assembling each wireless sensor interface module with at least one antenna therein; and
operatively coupling each expanding repeater (275) to at least one wireless sensor interface module, and/or
assembling each expanding repeater (275) with at least one modem therein;
and
assembling each expanding repeater (275) with filtering hardware to filter out a substantial portion of 50 Hertz (Hz) and 60 Hz interference.

17. A method in accordance with Claim 15 or Claim 16, wherein operatively coupling the AC electric power system to the at least two expanding repeaters comprises:
extending the AC electric power system between a plurality of portions of a facility;
positioning at least one expanding repeater (275) within each of the portions of the facility;
positioning a wall outlet (285) within each of the portions of the facility; and
operatively coupling the expanding repeaters (275) to each other via the AC electric power system by operatively coupling each expanding repeater (275) to one of the wall outlets (285).
